**Europäisches Patentamt**

**European Patent Office**

**Office européen des brevets**

(19)

(11) Veröffentlichungsnummer: **0 486 713 B1**

# EUROPÄISCHE PATENTSCHRIFT

(12)

(45) Veröffentlichungstag der Patentschrift: **13.07.94**

(51) Int. Cl.⁵: **G01B  11/06**

(21) Anmeldenummer: **90122068.1**

(22) Anmeldetag: **19.11.90**

(54) **Dickenmessgerät.**

(43) Veröffentlichungstag der Anmeldung:
**27.05.92 Patentblatt  92/22**

(45) Bekanntmachung des Hinweises auf die
Patenterteilung:
**13.07.94 Patentblatt  94/28**

(84) Benannte Vertragsstaaten:
**CH DE FR GB IT LI SE**

(56) Entgegenhaltungen:
**GB-A- 2 167 179**

(73) Patentinhaber: **FAG Kugelfischer Georg Schäfer Aktiengesellschaft
Postfach 12 60
D-97419 Schweinfurt(DE)**

(72) Erfinder: **Krämer, Werner
Gartenstrasse 49
W-8551 Igensdorf(DE)**

(74) Vertreter: **Rehmann, Klaus H.
Postfach 13 10
Hauptbahnhofstrasse
D-97403 Schweinfurt (DE)**

**Beschreibung**

Die Erfindung betrifft ein Dickenmeßgerät zum Messen der Dicke von kontinuierlich oder diskontinuierlich hergestelltem, bahnförmigen Meßgut, beispielsweise Folien aus unterschiedlichen Werkstoffen.

Die verschiedensten Meß -Verfahren und -Geräte sind bekannt. Traditionell werden Absorbtionsmeßverfahren mit ionisierender Strahlung, die sowohl die geforderte meßgenauigkeit liefern als auch unter rauhen Betriebsbedingungen im Langzeiteinsatz arbeiten, eingesetzt. Die Problematik dieser Einrichtungen liegt jedoch in der Verwendung von radioaktiven Strahlungsquellen, die dem erhöhten Umweltbewußtsein ebenso wenig Rechnung tragen wie der Angst vor der Strahlungsquelle.

Es wurden daher infrarote, kapazitive, induktive und Laser-Triangulations Meßverfahren entwickelt, die alle, je nach Verwendungsart, spezifische Vor- und Nachteile aufweisen, auf welche hier nicht näher eingegangen wird.

Alle diese Meßverfahren und -geräte arbeiten mit traversierendem Meßkopf bzw. Meßköpfen, derart, daß der Meßkopf quer zur Meßgut-Transportrichtung auf einer Führungsschiene verfahren wird. Die Meßgenauigkeit hängt neben der verfahrensbedingten Auflösung auch von der Stabilität der Meßkopf-Führungsschiene ab. Solange Meßgutbreiten unter 150 cm gemessen werden, kann der Meßkopf des Dickenmeßgerätes an einem stabilen c-förmigen Meßbügel befestigt sein. So bald aber Meßgutbreiten über 150 cm anfallen, muß ein Rahmen in Rechteckform vorgesehen werden, welcher bauartbedingt nicht die Steifigkeit des c-förmigen Meßbügels aufweisen kann.

Bei diesen Dickenmeßgeräten für Meßgutbreiten über 150 cm treten Durchbiegungen der Meßkopf-Führungsschiene während der traversierenden Bewegung des Meßkopfes auf, die als Fehler in das Meßergebnis einfließen.

Ein solches Dickenmeßgerät ist aus der GB-A-2 167 170 bekannt.

Es ist bereits bekannt zur Kompensation dieser Durchbiegungen einen Wirbelstromsensor im Meßkopf anzuordnen der ebenfalls berührungslos die Oberfläche einer **Referenzwalze** mißt, während die andere Meßeinrichtung des Meßkopfes die Oberfläche des Meßgutes vermißt. Aus der Differenz dieser beiden Werte wird die Dicke des Meßgutes bestimmt.

Dieses Dickenmeßgerät benötigt eine Referenzwalze und ist daher für Meßgut, welches freigeführt werden muß nicht verwendbar.

Die Erfindung hat sich die Aufgabe gestellt, ein gattungsgemäßes Dickenmeßgerät so zu verbessern, daß bei freigeführtem Meßgut die Durchbiegung der Meßkopf-Führungsschiene während der traversierenden Bewegung des Meßkopfes ermittelbar ist.

Die Aufgabe wird erfindungsgemäß dadurch gelöst, daß eine Laserlichtquelle so angeordnet ist, daß deren Strahl zur Feststellung vertikaler Bewegungsabweichungen des Meßkopfes bzw. der Meßköpfe einen unabhängig von der Laserlichtquelle angeordneten Detektor trifft.

Die beispielsweise Ausführungsformen des Erfindungsgegenstandes sind auf der Zeichnung schematisch dargestellt.

Es zeigen:

Figur 1      ein Dickenmeßgerät, mit zur Feststellung der Vertikalbewegungsabweichung der Meßköpfe angeordneter weiterer Laserlichtquelle in einem Meßkopf.

Figur 2      das Dickenmeßgerät nach Figur 1 mit je einer weiteren Laserlichtquelle in jedem Meßkopf.

Figur 3      das Dickenmeßgerät nach Figur 1 mit je einer den Meßköpfen zugeordneten weiteren Laserlichtquelle im oder am Rahmen des Dickenmeßgerätes.

Das mit 1 bezeichnete Dickenmeßgerät besteht aus einem Rahmen 2 durch welchen das bahnförmige Meßgut, beispielsweise Folien aus unterschiedlichen Werkstoffen, hindurchgeführt wird. In den Rahmen 2 ist je ein über und ein unter dem Meßgut angeordneter Meßkopf 3 und 4 jeweils auf einer Führungsschiene 5 und 6 horizontal verschiebbar angeordnet. Beide-Meßköpfe 3 und 4 weisen die zur Triangulationsmessung erforderlichen Laserlichtquellen 3a und 4a und Detektoren 3b und 4b auf.

Der geeichte und vorgegebene System-Abstand der Meßköpfe 3 und 4 ist mit A und die Dicke des Meßgutes mit d bezeichnet.

Die synchrone traversierende Bewegung der Meßköpfe 3 und 4 erfolgt durch die Linearantriebe 3c und 4c. Die mögliche Durchbiegung der Führungsschienen 5 und 6 ist für den Meßkopf 4 mit x1 und für den Meßkopf 3 mit x2 bezeichnet. Der sich aus der jeweiligen bekannten Triangulationsmessung ergebenden Abstand der Meßköpfe 3, 4 zum Meßgut ist für den Meßkopf 4 mit a1 und für Meßkopf 3 mit a2 bezeichnet.

Die Wirkungsweise und die jeweilige Ausgestaltung des Dickenmeßgerätes 1 wird anhand der Figuren nachfolgend erläutert:

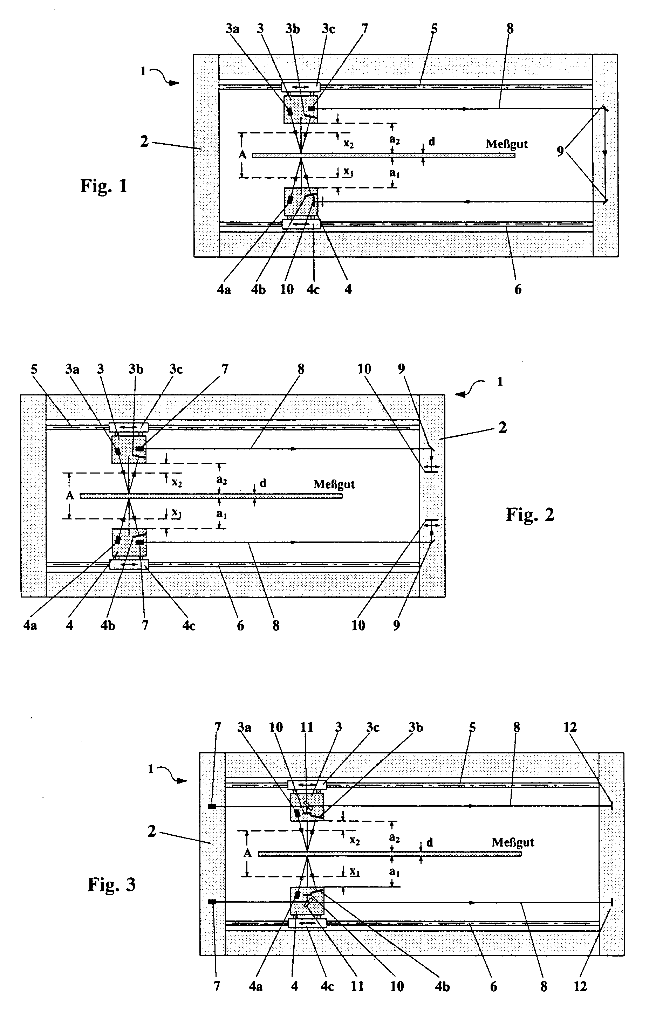

In Figur 1 ist in dem Meßkopf 3 eine weitere Laserlichtquelle 7 befestigt, deren Strahl 8 über die im oder am Rahmen 2 angeordneten Umlenkspiegel 9 den im Meßkopf 4 befestigten Detektor 10 trifft und somit die vertikalen Bewegungsabweichungen beider Meßköpfe 3 und 4 feststellt und als Signale einer an sich bekannten Auswerteelektronik zuleitet. Zusammen mit den Signalen aus der Triangulationsmessung wird die Dicke d des Meßgutes nach der Formel:

$$d = A - [(a1 + a2) \pm (x1 + x2)]$$

berechnet.

Die Dickenmeß-Einrichtung nach Figur 2 weist in jedem Meßkopf 3 und 4 eine zusätzliche Laserlichtquelle 7 auf, deren jeweiliger Strahl 8 über Umlenkspiegel 9 im oder am Rahmen 2 befestigte Detektoren 10 trifft, so daß diese Signale zusammen mit den Signalen der Triangulationsmessung die Dicke d des Meßgutes in der Auswerteelektronik nach folgender Formel bestimmen:

$$d = A-[(a1 \pm x1) + (a2 \pm x2)]$$

Nach Figur 3 sind an oder in dem Rahmen 2 des Dickenmeßgerätes 1 die weiteren Laserlichtquellen 7 derart befestigt, daß deren jeweiliger Strahl 8 über jeweils einen in den Meßköpfen 3 und 4 angeordneten Strahlteiler 11 sowohl jeweils eine zur Nulljustierung erforderliche im oder am Rahmen 2 - der Laserlichtquelle 7 gegenüberliegend - befestigte Photodiode 12 als auch jeweils einen in den Meßköpfen 3 und 4 angebrachten Detektor 10 trifft.

Bei dieser Anordnung wird die Dicke d des Meßgutes wie bei dem Dickenmeßgerät nach Figur 2, nämlich:

$$d = A - [(a1 \pm x1) + (a2 \pm x2)]$$

Die Meßgenauigkeit dieser Dickenmeßgeräte liegt bei 5 bis 10 Mikrometer.

## Patentansprüche

1. Dickenmeßgerät mit je einem über und einem unter dem Meßgut angeordneten Meßkopf (3,4), wobei jeder Meßkopf (3,4) mit einer zum Meßgut gerichteten Laserlichtquelle (3a,4a) und einem Detektor (3b,4b) zur Triangulationsmessung versehen ist, dadurch gekennzeichnet, daß beide Meßköpfe (3 4) auf je einer Führungsschiene (5 6) horizontal verschiebbar angeordnet sind, und daß mindestens eine weitere Laserlichtquelle (7) so angeordnet ist, daß ihr Strahl (8) zur Feststellung vertikaler Bewegungsabweichungen der Meßköpfe (3,4) einen Detektor (10) trifft.

2. Dickenmeßgerät nach Anspruch 1, dadurch gekennzeichnet, daß mindestens einer der Meßköpfe (3 oder 4) eine weitere Laserlichtquelle (7) aufweist, die so angeordnet ist, daß ihr Strahl (8) zur Feststellung vertikaler Bewegungsabweichungen der Meßköpfe (3,4) einen Detektor (10) im anderen Meßkopf (4, 3) über Umlenkspiegel (9) trifft.

3. Dickenmeßgerät nach Anspruch 1, dadurch gekennzeichnet, daß beide Meßköpfe (3 und 4) eine weitere Laserlichtquelle (7) aufweisen, deren jeweiliger Strahl (8) zur Feststellung vertikaler Bewegungsabweichungen der Meßköpfe (3,4) je einen Detektor (10), welcher im oder am Rahmen (2) des Dickenmeßgerätes (1) befestigt ist trifft.

4. Dickenmeßgerät nach Anspruch 1, dadurch gekennzeichnet, daß jeweils eine dem Meßkopf (3) und dem Meßkopf (4) zugeordnete Laserlichtquelle (7) so in oder am Rahmen (2) des Dickenmeßgerätes (1) befestigt ist, daß deren jeweiliger Strahl (8) zur Feststellung vertikaler Bewegungsabweichungen der Meßköpfe (3,4) über einen Strahlteiler (11) sowohl jeweils einen im Meßkopf (3,4) angeordneten Detektor (10) als auch jeweils eine zur Nulljustierung im oder am Rahmen (2) befestigte Photodiode (12) trifft.

## Claims

1. A thickness measuring apparatus with two measuring heads (3, 4) respectively arranged above and below the material to be measured, whereby each measuring head (3, 4) is provided with a laser light source (3a, 4a) directed towards the material to be measured and with a detector (3b, 4b) for triangulation measurement, characterised in that both measuring heads (3, 4) are arranged on horizontal guide rails (5, 6) such that they can be displaced horizontally, and that at least one further laser light source (7) is arranged such that its beam (8) impinges upon a detector (10) to enable it to determine vertical deviations in the movement of the measuring heads (3,4).

2. A thickness measuring apparatus according to claim 1, characterised in that at least one of the measuring heads (3 or 4) is provided with a further laser light source (7) which is arranged such that its beam which determines vertical deviations in the movement of the measuring heads (3, 4) impinges upon a detector (10) in the other measuring head (4, 3) via a deflecting mirror (9).

3. A thickness measuring apparatus according to claim 1, characterised in that both measuring heads (3 and 4) are each provided with a further laser light source (7), whereby its beam (8) which determines vertical deviations in the movement of the measuring head (3, 4) impinges in each case upon a detector (10) secured in or on the frame (2) of the thickness measuring apparatus (1).

4. A thickness measuring apparatus according to claim 1, characterised in that laser light sources (7) assigned respectively to the measuring head (3) and the measuring head (4) are secured in or on the frame (2) of the thickness measuring apparatus (1) such that their respective beams (8) which determine vertical deviations in the movement of the measuring heads (3, 4) impinge in each case via a beam splitter (11) upon a detector (10) arranged in the measuring head (3, 4) and on a photodiode (12) for zero adjustment secured in or on the frame (2).

**Revendications**

1. Appareil de mesure d'épaisseur comportant des têtes de mesure (3,4) disposées l'une au-dessus et l'autre au-dessous de l'objet à étudier, chaque tête de mesure (3,4) étant équipée d'une source de lumière laser (3a,4a) dirigée vers l'objet à étudier et d'un détecteur (3b 4b) pour effectuer une mesure de triangulation, caractérisé en ce que les deux têtes de mesure (3,4) sont disposées sur des rails respectifs de guidage (5,6) de manière à être déplaçables horizontalement et qu'au moins une autre source de lumière laser (7) est disposée de telle sorte que son faisceau (8) rencontre un détecteur (10) pour déterminer des écarts verticaux de déplacement des têtes de mesure (3,4).

2. Appareil de mesure d'épaisseur selon la revendication 1, caractérisé en ce qu'au moins l'une des têtes de mesure (3 ou 4) comporte une autre source de lumière laser (7), qui est disposée de telle sorte que son faisceau (8) destiné à déterminer des écarts de déplacement verticaux des têtes de mesure (3,4) rencontre un détecteur (10) situé dans l'autre tête de mesure (4,3), en étant réfléchi par un miroir de renvoi (9).

3. Appareil de mesure d'épaisseur selon la revendication 1, caractérisé en ce que les deux têtes de mesure (3 et 4) comportant chacune une autre source de lumière (7), dont les faisceaux respectifs (8) destinés à déterminer des écarts de déplacement verticaux des têtes de mesure (3,4) rencontrent respectivement un détecteur (10) qui est fixé dans ou sur le châssis (2) de l'appareil de mesure d'épaisseur (1).

4. Appareil de mesure d'épaisseur selon la revendication 1, caractérisé en ce que chaque fois une source de lumière laser (7) associée à la tête de mesure (3) et à la tête de mesure (4) est disposée dans ou sur le châssis (2) de l'appareil de mesure (1) de telle sorte que son faisceau respectif (8) destiné à déterminer des écarts de déplacement verticaux des têtes de mesure (3,4) rencontre, grâce à un diviseur de faisceau (11), aussi bien un détecteur respectif (10) situé dans la tête de mesure (3,4) qu'une photodiode respective (12) fixée dans ou sur le châssis (2) pour l'ajustement du zéro.

Fig. 1

Fig. 2

Fig. 3